# EUROPEAN PATENT APPLICATION

(11) **EP 1 742 167 A2**
(43) Date of publication of application: **10.01.2007**
(21) Application number: 06116128.7
(22) Date of filing: 27.06.2006
(51) Int. Cl.: G06K 7/00, G06K 19/07

(54) **ID tags with frequency diversity**

(30) Priority: 27.06.2005 US 167216
(71) Applicant: Honeywell International Inc., Morristown, NJ 07962 (US)
(72) Inventor: Pandit, Bharath C., 560068 Vijayanager (IN); Mahasenan, Arun V., 560076 Bangalor (IN)
(74) Representative: Haley, Stephen

(57) **Abstract**

A system (110) tracks assets using RFID tags (114). A plurality of RFID readers (112) use different frequencies to read RFID tags. A plurality of assets each have a RFID tag coupled to them. The RFID tag changes a response frequency as a function of a next RFID reader scheduled to track the corresponding asset. Assets may be components in an assembly line, patients in hospitals, containers, or other things that need to be tracked at different locations.

## Description

RFID tags are finding numerous applications in asset tracking and monitoring. In assembly lines, the use of such tags can help with assembly by making sure parts are correctly identified and used in assembling products. Each part may be provided a tag to uniquely identify the part. When parts or readers are placed closely on an assembly line, reader/tag collisions between adjacent readers/tags can result in incorrect identification, or confusion in correctly identifying the parts. This can occur in many different situations, such as when the spacing between adjacent stages in an assembly line is comparable to that between a reader and tag.

Prior attempts to minimize such confusion involved reducing transmit power levels. Doing so may increase a bit error rate (BER) of a link due to reduced signal to noise ratio (SNR). Attempting to implement synchronization schemes can greatly increase the cost and complexity of systems.

A system tracks assets using RFID tags on the assets. A plurality of RFID readers use different frequencies to read RFID tags. The RFID tag changes a response frequency as a function of a next RFID reader scheduled to track the corresponding asset.

### In the Drawings;

FIG. 1 is a block diagram of and RFID tag and reader according to an example embodiment.

FIG. 2 is a block diagram of an assembly line utilizing RFID tags and readers according to an example embodiment.

FIG. 3 is a block diagram of an RFID tag according to an example embodiment.

FIG. 4 is a state diagram of a component RFID tag according to an example embodiment.

FIG. 5 is a state diagram of an assembly RFID tag according to an example embodiment.

FIG. 6 is a state diagram of a reader according to an example embodiment.

FIG. 7 is a block diagram of a computer system for implementing algorithms according to an example embodiment.

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description is, therefore, not to be taken in a limited sense, and the scope of the present invention is defined by the appended claims.

The functions or algorithms described herein are implemented in software or a combination of software and human implemented procedures in one embodiment. The software comprises computer executable instructions stored on computer readable media such as memory or other type of storage devices. The term "computer readable media" is also used to represent carrier waves on which the software is transmitted. Further, such functions correspond to modules, which are software, hardware, firmware or any combination thereof. Multiple functions are performed in one or more modules as desired, and the embodiments described are merely examples. The software is executed on a digital signal processor, ASIC, microprocessor, or other type of processor operating on a computer system, such as a personal computer, server or other computer system.

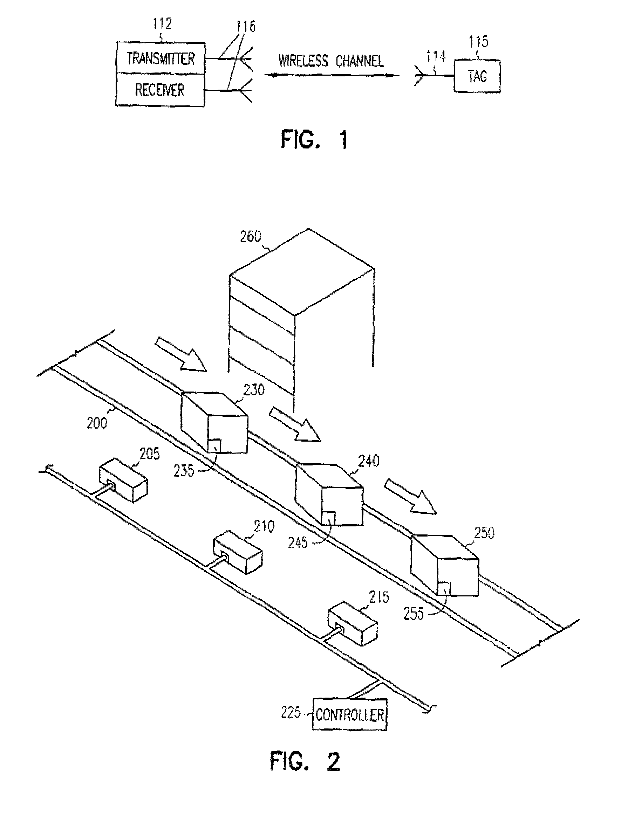

As shown in FIG. 1, a basic RFID system 110 includes two components: a reader 112, and a transponder (commonly called an RFID tag) 114. The reader 112 and RFID tag 114 include respective antenna circuits 116,118. In one embodiment, the RFID tag 114 is an active RFID tag. It contains a power source and transmitter that is used to generate its own radio frequency energy.

In operation, the reader 112 receives transmission from the RFID tag through its antenna circuit 116. In response to successfully receiving the transmission, the reader 112 sends an acknowledgement back to the RFID tag 114. In one embodiment, the readers receive data from RFID tags at different frequencies, resulting in frequency diversity.

A typical RFID system 110 often contains a number of RFID tags 114 and one or more readers 112. RFID tags are divided into three main categories. These categories are beats-powered passive tags, battery-powered semi-passive tags, and active tags. Each operates in different ways.

The bearn-powered RFID tag is often referred to as a passive device because it derives the energy needed for its operation from the interrogation signal beamed at it. The tag rectifies the energy field and changes the reflective characteristics of the tag itself, creating a change in reflectivity that is seen at the interrogator. A battery-powered semi-passive RFID tag operates in a similar fashion, modulating its RF cross-section in order to reflect a delta to the interrogator to develop a communication link. Here, the battery is the source of the tag's operational power for optional circuitry. The passive and semi-passive devices, or non-active devices, reflect the energy from the interrogation signal. In contrast, in an active RFID tag, a transmitter is used to generate its own radio frequency energy powered by the battery.

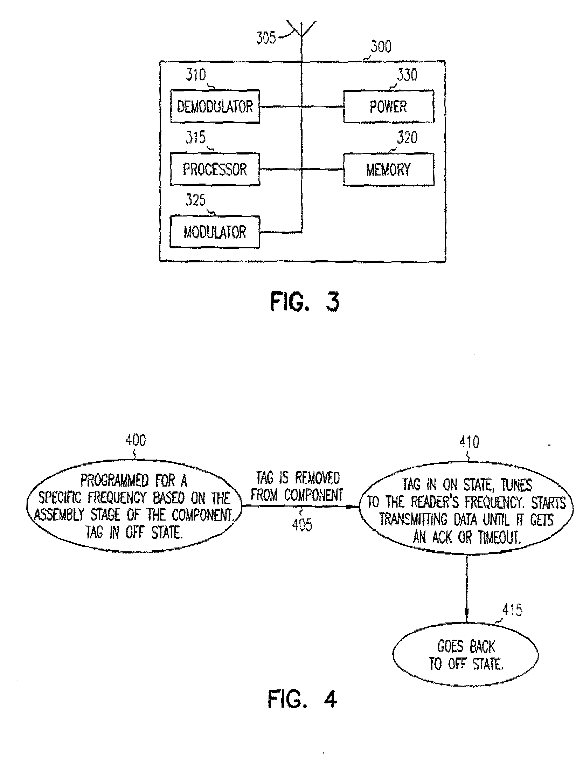

In one embodiment, active RFID tags are utilized to track assets, such as components and assembles. Assets that may be tracked also include patients that are monitored in hospitals, container tracking in shipping environments, and other assets that are tracked in different locations. In the present embodiment, the term "assemblies" is used to refer to a major component of a product being assembled, such as an engine. Other components are added to the engine as the engine or assembly progresses down an assembly line 200 as shown in FIG. 2. A plurality of readers 205, 210 and 215, correspond to successive stages on the assembly line 200. Each reader operates at a different frequency, f1, f2 and f3 respectively. The readers may be coupled by a network 220, which may be hardwired, or wireless, and in turned coupled to a controller 225 for controlling or tracking assembly line operations.

An engine 230 is shown on the assembly line 200 at a first station or stage. It has an assembly RFID tag 235. The engine is also shown at second and third stages at 240 and 250, with corresponding RFID tags 245 and 255. The various engines at the stages are representative of the same engine, or different engines, each receiving components that are assembled at the various stages. An assembly section 260 associated with the first stage contains various components that are added to engine 230 at the first stage. Successive stages may have further assembly sections.

The components are also equipped with component RFID tags. In one embodiment, each of the RFID tags for both components and assemblies are programmed to transmit at a frequency corresponding to the station it is at, or in the case of some components, the station where it is to be added to or assembled in the assembly. Assembly RFID tags change frequencies as the engine progresses down the assembly line and moves to different stages. The frequencies may be preprogrammed into the RFID tags, and may be successively increasing frequencies, or otherwise. In one embodiment, frequencies for successive stages may be selected to minimize interference between stages. RFID tags for components may be removed upon assembly, and transmit at that time, or may be transmitting prior to assembly if desired. The tags may be reused after removing from one component. and information in the tags about the components may be updated, or frequencies changed if required.

FIG. 3 is a diagram of an RFID tag 300 formed in accordance with one embodiment of the present invention The RFID tag 300 includes a transceiver, and has an antenna 305 is coupled to a demodulator 310, which receives transmitted radio-frequency signals from the antenna 305 and extracts data contained therein. The demodulator 310 is coupled to a processor 315, which analyzes the data extracted from the radio frequency signal. In one embodiment, the processor 315 is coupled to a memory 320, such as a non-volatile programmable memory and the processor 315 generates control signals to store data in the memory 320 based on the data extracted from the transmitted radio-frequency signal, such as an acknowledgement from a reader. The processor 315 is coupled to a modulator 325 and generates control signals to control the modulation of a radio-frequency signal by the modulator 325, based on the data extracted from the received radio-frequency signal. The modulator 325 is coupled to the antenna 305 for transmission of the signal. In one embodiment, power circuitry 330 includes a batter for powering the RFID circuitry.

Component tags are reusable, and may be mounted on critical components that need to be assembled on the engine. Programming of memory 320, as illustrated in a state diagram of FIG. 4, may be done through a user interface in which a component type and ID are provided. Based on the stage in which the component is going to be assembled, its transceiver is tuned to the desired frequency at 400 of the corresponding assembly stage. Once programmed, the component tag will be using this frequency for communication. The tag will be removed from the component at 405 once the component gets assembled. When the tag is removed from the component, it comes to an ON state, tunes to the reader's frequency and starts transmitting to the reader at that stage at the proper frequency 410. The tag keeps sending its data until it gets an acknowledgement or for a predetermined timeout period, whichever occurs earlier. Once this happens, the tag will again go to the OFF state at 415.

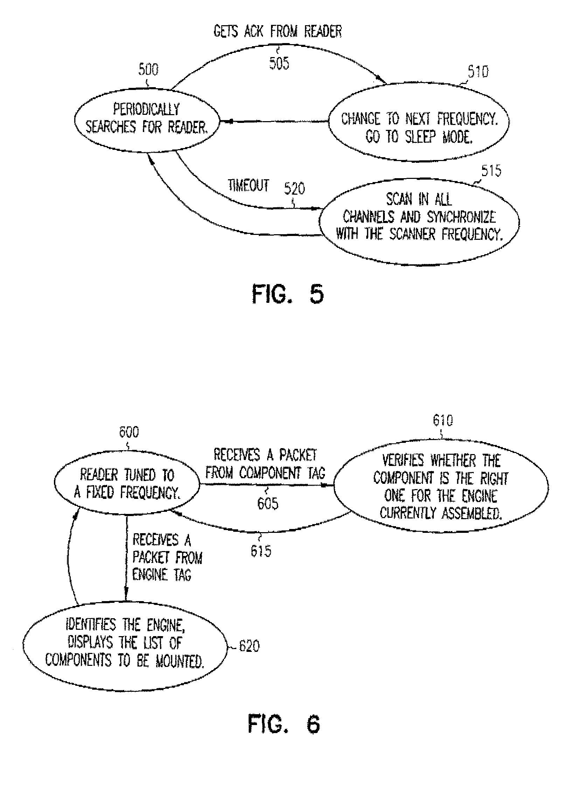

An engine or assembly tag follows a state diagram as shown in FIG. 5. Engine tags are mounted on the engine body and are programmed with the engine ID and frequency of the first stage in one embodiment. In the first stage of the assembly line, when the operator triggers the engine tag, it will send out the engine ID information to the reader at 500. Once it gets an acknowledge (ACK) at 505 from the reader, it changes at 510 to the frequency of the next, stage 2 reader. The sequence of frequencies of the various stages may be stored in nonvolatile memory of the engine tag while programming. Once the frequency is changed, it goes to the OFF state or sleep mode at 510. The engine tag periodically comes to the ON state at 500 and looks for the reader. The period may be determined by the speed at which the conveyor belt moves- If the engine tag does not get a reply from the expected reader (perhaps the reader is not functioning correctly) within the expected time period, it changes to the next frequency - that of the third stage. The present frequency of operation of the tag will be stored in the flash, so that if the tag gets reset accidentally, it can recover. In one embodiment, the engine tag scans all channels and synchronizes with the closest reader frequency at 515 following a timeout 520.

Readers may be connected to the controller through a multi-drop network as shown in FIG. 2. Each of the stages in the assembly which has at least one critical component to be tracked will have a tag at that stage. Each of the readers knows what components need to be assembled at a corresponding stage for the type of engine. This information may be obtained from the controller through a serial port, or other network connection. Thus, the reader at a stage "n" will have a table containing all the engine types as well as all the components that need to be assembled at that stage.

An example table structure stored at the reader is as follows;

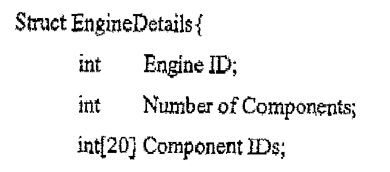

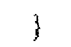

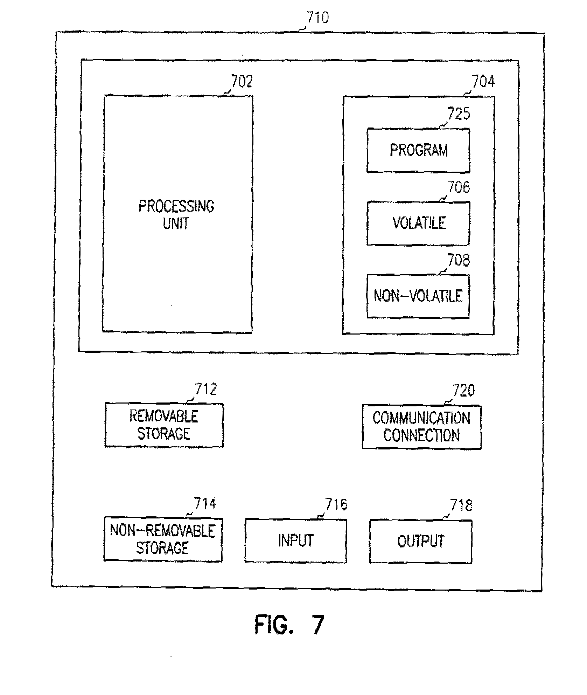

There may be other tables that map the engine ID and component ID's to their equivaient character representations for display purposes. Each of the readers may be programmed to communicate in a predefined fixed frequency as shown at 600 in a state diagram of FIG. 6. The frequency is selected in such a way that the frequency separation between adjacent readers is maximized. This will ensure that the communication happening in adjacent stages will have minimum impact on a given reader. The readers are programmed to have a range of approximately 10 meters in one embodiment, but the range may be varied significantly. The same frequency may be used for two readers that are sufficiently distant from each other to avoid interference. The series of frequencies may also be repeated if there are an insufficient number of available frequencies for the number of stations required for proper assembly,

When a packet is received from a component RFID tag at 605, the reader verifies at 610 whether the component is the right one for the engine currently assembled using one of the table structures described above. A packet 615 may then be received from an engine RFID tag, at which point the reader identifies the engine at 620 and displays the list of components to be mounted on the engine.

A block diagram of a computer system, such as the controller, or processor and memory combinations in the RFID tags, that executes programming for performing the above algorithms is shown in FIG. 7. A general computing device in the form of a computer 710, may include a processing unit 702, memory 704, removable storage 712, and non-removable storage 714. Memory 704 may include volatile memory 706 and non-volatile memory 708. Computer 710 may include ― or have access to a computing environment that includes ― a variety of computer-readable media, such as volatile memory 706 and non-volatile memory 708, removable storage 712 and non-removable storage 714. Computer storage includes random access memory (RAM), read only memory (ROM), eraseable programmable read-only memory (EPROM) & electrically eraseable programmable read-only memory (EEPROM), flash memory or other memory technologies compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 710 may include or have access to computing environment that includes input 716, output 718, and a communication connection 720. The computer may operate in a networked environment using a communication connection to connect to one or more remote computers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 702 of the computer 710. A hard drive, CD-ROM, and RAM are some examples of articles including a computer-readable medium. For example, a computer program 725 capable of providing a generic technique to perform access control check for data access and/or for doing an operation on one of the servers in a component object model (COM) based system according to the teachings of the present invention may be included on a CD-ROM and loaded from the CD-ROM to a hard drive. The computer-readable instructions allow computer system 700 to provide generic access controls in a COM based computer network system having multiple users and servers.

The Abstract is provided to comply with 37 C.F.R. § 1.72(b) to allow the reader to quickly ascertain the nature and gist of the technical disclosure. The Abstract is submitted with the understanding that it will not be used to interpret or limit the scope or meaning of the claims.

## Claims

1. A system for asset tracking using RFID tags on assets, the system comprising:
a plurality of RFID readers using different frequencies to read RFID tags; and
a plurality of assets, each having a RFD tag coupled thereto, wherein the RFID tag changes a response frequency as a function of a next RFID reader scheduled to track the corresponding asset.

2. The system of claim wherein RFID readers are associated with stages of an assembly line, each operating at a predetermined different frequency.

3. The system of claim 2 wherein each RFID tag coupled to an asset changes to a next of the predetermined different frequency when recognized by one of the RFID readers.

4. The system of claim 3 wherein the RFID tag changes frequency in response to as acknowledgement from a RFID reader.

5. The system of claim 4 wherein an asset RFID tag changes frequencies in a preprogrammed order.

6. The system of claim 5 wherein the preprogrammed order of frequencies are stored in a non-volatile memory of the RFID tag.

7. The system of claim 5 wherein the RFID tag goes to an off stage for a predetermined time after changing frequencies.

8. The system of claim 7 wherein the predetermined time is a function of assembly line speed.

9. The system of claim 5 wherein the RFID tag changes to a next frequency if no reader response is obtained within a predetermined time between stages.

10. The system of claim 2 wherein an asset has a programmed stage specific RFID tag that responds to a frequency corresponding to the stage at which the asset will be used in assembly.

11. The system of claim 10 wherein stage specific RFID tags are removed at their corresponding assembly stage.

12. A system for asset tracking using RFID tags on assets, the system comprising:
a plurality of RFID readers using different frequencies to read RFID tags, wherein each RFID reader is positioned at a different one of N stages, and is responsive to RFID tags on assets to be tracked at the corresponding stage.

13. The system of claim 12 wherein frequencies of adjacent readers have a frequency separation to ensure minimal impact on a given reader.

14. The system of claim 12 and further comprising a controller, and a network coupling the readers to the controller.

15. The system of claim 14 wherein the controller provides readers with information regarding assets, including components to be assembled at each stage.

16. The system of claim 12 wherein the reader comprises a data structure identifying assets, including an assembly, and components to be added to the assembly at the stage.

17. The system of claim 12 wherein the reader receives packets from assets, and provides an acknowledgement in response to the packets at the frequency of the reader.

18. The system of claim 12 wherein the same frequency may be used for two readers that are sufficiently distant from each other to avoid interference.

19. A plurality of components to be assembled at different stages of an assembly line, each component having an RFID tag that operates at a frequency corresponding to the stage at which it is to be assembled, which is a frequency different from frequencies used at other stages.

20. The plurality of components of claim 19, wherein each RFID tag comprises a processor and a memory, and wherein the memory is programmed with the frequency corresponding to the state at which it is to be assembled.

21. A method comprising:
using a plurality of readers operating at different frequencies to track progress of assembly of components at various assembly stations; and
the readers responding to components that have tags that are preprogrammed with a frequency corresponding to the station where they are to be assembled, such tags providing component identification information to the reader at such station.
